Europäisches Patentamt

European Patent Office

Office européen des brevets

(19)

(11) Publication number: **0 029 326**
**A1**

## EUROPEAN PATENT APPLICATION

(12)

(21) Application number: 80303979.1

(22) Date of filing: **06.11.80**

(51) Int. Cl.³: **G 01 G 3/08**

(30) Priority: **16.11.79 GB 7939699**

(43) Date of publication of application: **27.05.81**
**Bulletin 81/21**

(84) Designated Contracting States: **AT BE CH DE FR IT LI
LU NL SE**

(71) Applicant: **THORN DOMESTIC APPLIANCES
(ELECTRICAL) LIMITED, Thorn House Upper St. Martins
Lane, London WC2H 9ED (GB)**

(72) Inventor: **Royle, Terence Gordon, 50 Durley Avenue,
Cowplain Hampshire PO8 8UZ (GB)**
Inventor: **Newton, Stephen John, 92 Lion Lane
Shottermill, Haslemere Surrey (GB)**

(74) Representative: **Ayers, Martyn Lewis Stanley et al, J.A.
KEMP & CO. 14 South Square Gray's Inn, London,
WC1R 5EU (GB)**

(54) **Weighing apparatus.**

(57) A weighing apparatus comprises: a platform (1) for arti-
cles to be weighed, the platform being vertically movable
against the action of a spring (2) and supported at a plurality of
locations by respective levers (23); a member (21) is connect-
ed to each of the levers (23) in a mechanical summing arrange-
ment so as to be moved in accordance with the vertical move-
ment of the platform (1) and thereby provide an indication of
the weight of an item when placed on the platform. The move-
ment of the member (20) is detected by the strain gauges (5A,
5B) mounted on leaf spring (2) and converted to an electrical
signal for display purposes. The member (20) may be connect-
ed to leaf spring (2) by means of a pin in point contact with
member (20) or by means of a stranded wire. Various other
electrical position transducer arrangements are also dis-
closed.

ACTORUM AG

- 1 -

DESCRIPTION

"WEIGHING APPARATUS"

The present invention relates to weighing apparatus.

According to the present invention there is provided a weighing apparatus comprising: a base; a platform for articles to be weighed, the platform being vertically movable against the action of a spring; a mechanical output element disposed below the central region of the platform, the mechanical output element being linked to the platform by a number of substantially identical levers radiating outwardly from it and constituting a mechanical summing arrangement for moving the mechanical output element in accordance with the vertical movement of the platform and thereby providing an indication of the weight of an item when placed on the platform, the levers being pivoted to the mechanical output element, the base and the platform by means of leaf springs.

The levers act as a mechanical summing arrangement which helps to render the measurement independent of the position where the item is placed on a platform. In some prior scales, the reading has been heavily dependent on the precise position of the item, as well as its weight. In one form, the apparatus comprises a base which is square or circular in plan and has upstanding side walls. The member is disposed above the centre of the base and is supported by four levers which radiate inwards from the corners of the base. The levers are pivoted to the base at its corners and to the centrally disposed mechanical output element. The platform, also square in plan, is disposed above the base and provided with four depending arms which are each pivoted to a respective one of the levers at locations intermediate the ends of the arms so that the movement of the output element is an amplified version of that of the platform.

One of the factors which tends to increase the cost of scales is the need in prior scales to provide knife edges or similar pivots, particularly where a reasonably fine resolution of weight is required. We have found that satisfactory operation can be achieved using leaf springs in place of knife edges. Thus, the levers are each pivoted to the base and to the output element by leaf springs which can be made cheaply from tempered steel.

In our preferred embodiment, disposed below the output element is a horizontally extending leaf spring which provides the spring force which balances the weight of the item in question. This leaf spring is provided with an upwardly extending pin which engages in a concave recess on the underside of the central member. Strain gauges are placed on the upper and lower surfaces of the leaf spring and, as they are disposed to opposite sides of the neutral axis of the leaf spring, when the leaf spring bends in one direction the output of one strain gauge increases while the other decreases. By using a differential amplifying arrangement for the outputs of the strain gauges it is thus possible to cancel the effects of temperature on the readings from the strain gauges.

To eliminate the friction involved in the pin and recess arrangement, the output element may be connected to the leaf spring by a thin, flexible wire, which is preferably stranded. Such a wire may also be used to connect the output element to a movable element of various other types of positional transducer.

The invention will be further described by way of example, with reference to the accompanying drawings, in which:-

Figure 1 is a somewhat schematic vertical section through an embodiment of the invention;

Figure 2 is a vertical section along the line III-III of Figure 3;

Figure 3 is a plan view in greater detail of part of the embodiment of Figures 1 and 2;

Figure 4 is a block circuit diagram of the embodiment of Figures 1 to 3;

Figure 5 is a vertical section through a second embodiment of the invention; and

Figure 6 is a vertical section through part of a third embodiment of the invention.

Broadly, the scales illustrated in the drawings comprise a platform 1 on which articles are placed for weighing, this platform being movable downwardly against the action of a horizontally extending leaf spring 2 which is held in a mounting 3 fixed to a base 4.

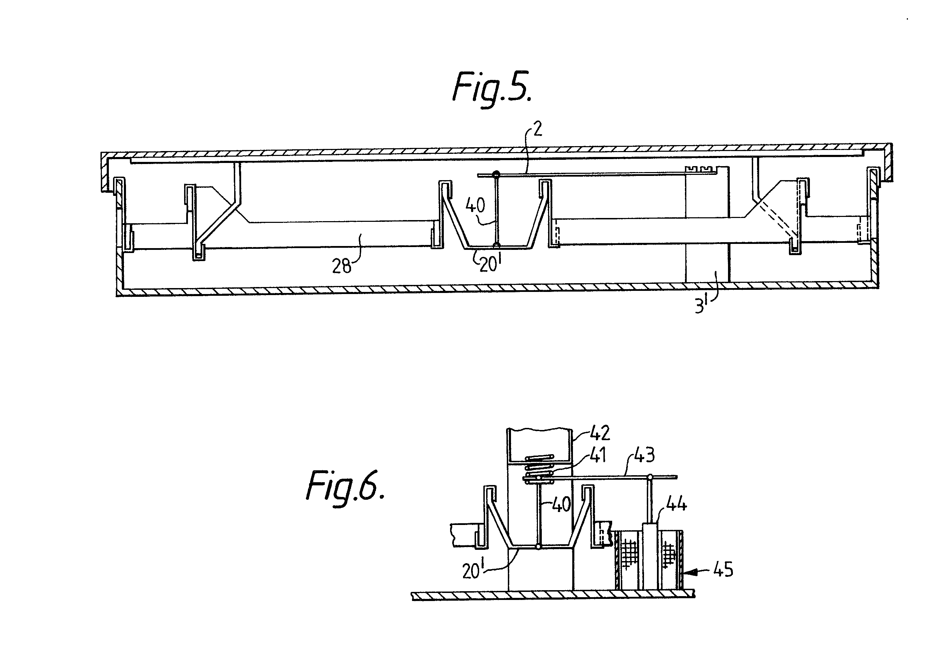

Mounted above and below the neutral axis of the leaf spring 2 are respective strain gauges 5A and 5B. As indicated in Figure 4 these form two arms of a bridge which also comprises resistors 6 and 7. A reference voltage is applied across the corners X, Y while output voltages from the bridge are picked off by amplifiers 8 and 9 which are connected to the other two corners of the bridge. The difference between the outputs of amplifiers 8 and 9 is formed by a differencing amplifier 10. Because the strain gauges are displaced in opposite directions from the neutral axis of leaf spring 2, when the leaf spring is deflected in one direction, the resistance of one of the strain gauges increases while that of the other decreases. By forming a signal representing the difference between the outputs of the strain gauges, the effects of changes in the resistances of the two strain gauges due to temperature variations tend to be cancelled while those of changes in their resistances resulting from deflection of the spring, add.

The output of amplifier 10 is fed to a charge pump comprising resistor 11 and capacitor 12 which provide a time constant long enough so that the voltage at their common junction is smoothed so as to be insensitive to shocks applied to the scales, e.g. by way of the surface on which they rest being knocked. The output from the charge pump is delivered to an analog to digital converter 13 and thence in digital form to a microprocessor 14 (the analog to digital converter may be on the MPU chip). The MPU 14 is programmed to respond to user controls from switches S1 and S2 and display the weight of the item being weighed on displays 15. The MPU is suitably programmed so that it can respond to the operation of the two position switch S1 whereby it will display the weight in pounds or kilogrammes as selected by the user; the display preferably includes pounds and kilogrammes symbols to provide a clear indication of the units in which the weight is being displayed. A push-button S2 provides a tare function so that when it is desired to mix weighed amounts of an ingredient, it is possible to add them in sequence to the same bowl, resetting the tare button between ingredients.

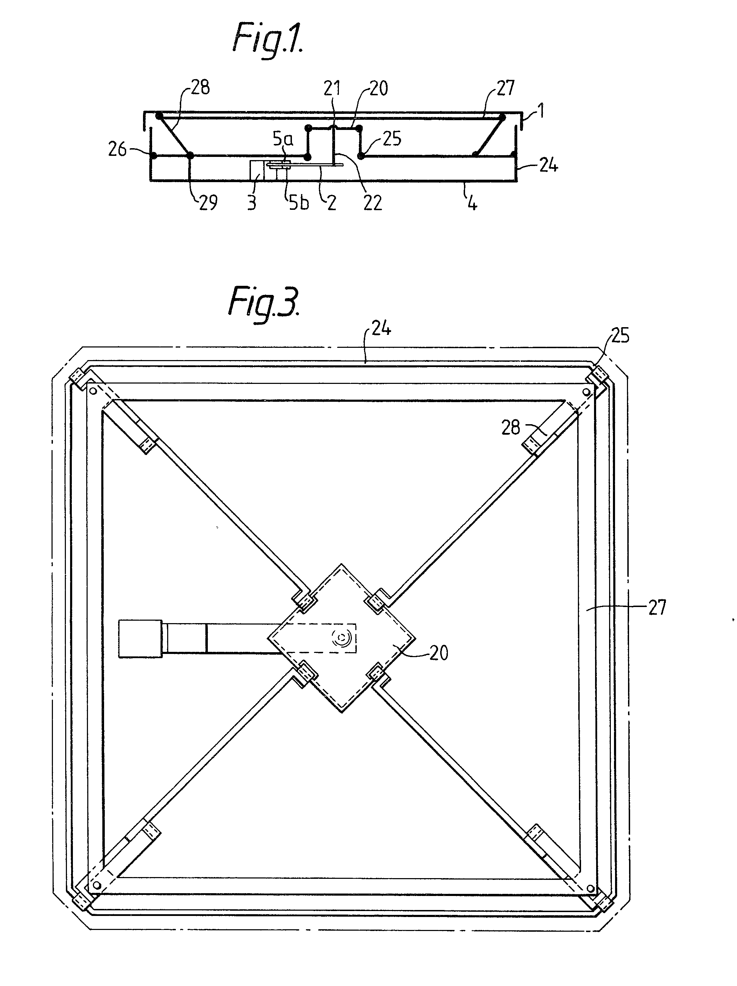

Referring now in more detail to Figures 1 to 3, disposed below the centre of the platform 1 is a member 20 in the form of an open-bottomed square box. In its centre there is a downwardly concave depression 21 in which engages a pin 22 fixed to the leaf spring 2.

As can be seen from Figure 3, the base 4 is square in plan and has four upstanding side walls such as 24, the corners between which are chamfered, as at 25. To these chamfered portions are pivoted, at 26, respective horizontal levers 23 which extend inwards towards the

- 5 -

central member 20 and are pivoted to it as at 25. The platform 1 rests on a square annulus 27 which has four arms such as 28 extending inwardly and downwardly from its corners and pivoted to the levers 23 as at 29. The levers 23 thus act as a mechanical summing arrangement between the platform 1 and the central member 20 so that a downward movement of the platform 1 against the action of the spring 2 produces an amplified downward movement of the central member 20; it is the movement of this latter member which the strain gauges 5A and 5B detect and measure. The mechanical summing arrangement effect provided by the use of the four levers 23 to support the platform 1 means that the dependency of the scale reading on the position of an item on the platform is reduced.

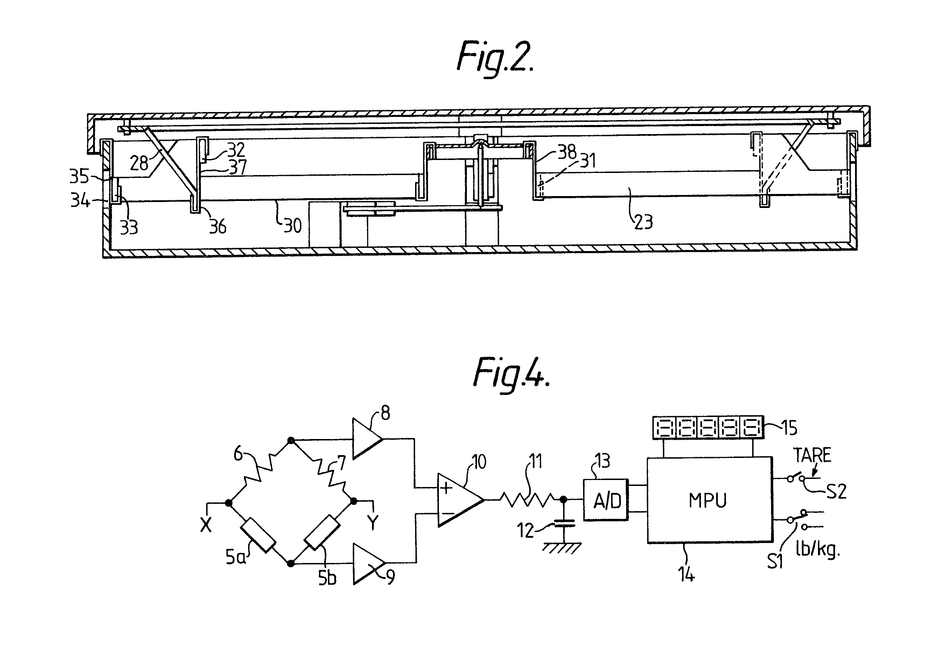

As indicated in Figure 2, each lever 23 comprises a horizontally elongate part 30 and portions 31, 32 and 33 which are turned out of the plane of Figure 2. The levers 23 may thus be made by stamping from sheet metal and appropriately folding the portions 31, 32 and 33. A cutout 34 is provided in each chamfered corner of the base so that the lever 23 can pivot without its outer end fouling against the base.

Also as shown in Figure 2, each lever 23 is supported at the corner 25 of the base by an S-shaped leaf spring 35 which hooks over the top edge of the side wall and under the portion 33 and constitutes the pivot 26. The spring 35 may be fixed to the portion 33 and the side wall by any appropriate means such as gluing, etc. Similarly, the down-turned arms 27 of the annulus 26 are provided with vertical portions 36 which are located below the portions 31 of each lever. Again, an S-shaped leaf spring 37 hooks over the portion 31 and under the portion 34 so as to constitute the pivot 29. Thus, downward movement of the annulus 26 results in pivoting of each lever 23 about its leaf spring support 35 relative to the base 1. Similarly, the portion 31 of each lever 23 is interconnected by an S-shaped leaf spring 38 to the central member 20; this spring constitutes the pivot 25.

As has been explained above, the use of leaf springs to facilitate the pivoting of the lever 23 relative to the central member 20 and the platform and base means that the pivots can be produced much more cheaply than, for example, knife edges.

It will be apparent that there is no need for the arms 28 which interconnect the platform and the levers 23 to be formed on the annulus 27. They could be mounted directly on the underside of the platform if so desired and the annulus 27 would then be omitted.

Figure 5 shows an embodiment of the invention which is generally similar to that of Figures 1 to 4 but differs in the manner in which the movement of the arms 23 is transmitted to the leaf spring 2. Here, the member 20' is inverted as compared with the corresponding member 20 of the Figure 1 embodiment and has divergent side walls. Interconnecting the central portion of the floor of member 20' and the free end of leaf spring 2 is a thin, flexible wire 40 made, for example, of steel or copper. The wire is preferably stranded so that it is as flexible as possible and can thus sustain force only along its length, so ensuring that the leaf spring 2 is subjected to a simple, single point load by the member 20'. The use of the wire also eliminates the friction involved in the engagement of the pin 22 with member 20 in Figure 1.

Figure 6 shows part of a further modification of the embodiment of Figure 1 in which the leaf spring 2 is replaced by a coil spring 41 linked to the member 20' by means of a wire 40 as in Figure 5. The coil spring 41 is mounted on a support 42 which is in turn mounted on the base and is open sided to enable the side portions of the member 20' to extend through it and link with the arms 23 (not shown in Figure 6). The wire 40 is actually connected to a rigid arm 43 carried at the lower end of the spring 41 and extending laterally beyond the member 20' and support 42 to a location where it is rigidly connected by a vertical bar or rod to the armature 44 of a moving iron or moving magnet positional transducer 45 from which the weight signal is derived. The coil may be provided with a stabiliser to ensure that the arm 43 stays level as it moves vertically. The transducer 45 may incorporate two coils arranged to produce a differential output so as to eliminate the effects of temperature, etc.

The shape of the base may be varied. For example, it could be circular with, say, three arms 23 symmetrically disposed around its central axis.

Numerous other modifications of the above described apparatus will be apparent to those skilled in the art. For example, the strain gauge arrangement might be replaced by a Moire fringe transducer or by a linear variable transformer.

- 8 -

CLAIMS

1. A weighing apparatus comprising: a base; a platform for articles to be weighed, the platform being vertically movable against the action of a spring; a mechanical output element disposed below the central region of the platform, characterised by the following combination of features, namely that the mechanical output element is linked to the platform by a number of substantially identical levers radiating outwardly from it and constituting a mechanical summing arrangement for moving the mechanical output element in accordance with the vertical movement of the platform and thereby providing an indication of the weight of an item when placed on the platform, and that the levers are pivoted to the mechanical output element, the base and the platform by means of leaf springs.

2. An apparatus according to Claim 1, characterised in that the levers are substantially identical stampings of sheet metal.

3. Apparatus according to Claim 1 or 2, characterised in that the levers are symmetrically disposed around the member.

4. Apparatus according to any one of the preceding claims, characterised in that the outer ends of the levers are pivoted to side walls of the base.

5. Apparatus according to any one of the preceding claims, characterised in that the levers are connected to the platform by down-turned arms on the platform.

6. Apparatus according to any one of Claims 1 to 5, characterised in that the member comprises a horizontal plate-like part with depending side flanges to which the levers are connected by the leaf springs.

7.  Apparatus according to any one of Claims 1 to 6, characterised in that an input element of a transducer arrangement is connected to the mechanical output element for producing an electrical signal indicative of the weight of an item placed on the platform.

8.  Apparatus according to Claim 7, characterised in that the mechanical output element is connected to the input element of the transducer arrangement via a wire.

9.  Apparatus according to Claim 8, characterised in that the wire is stranded.

10.  Apparatus according to any one of the preceding claims, characterised in that the spring against the action of which the platform is vertically movable is a horizontal leaf spring.

11.  Apparatus according to Claim 10 and Claim 7, 8 or 9, characterised in that said horizontal leaf spring forms the input element of the transducer arrangement.

12.  Apparatus according to Claim 11, characterised in that at least one strain gauge is mounted on the leaf spring to produce said electrical signal.

13.  Apparatus according to Claim 12, characterised in that two strain gauges are mounted on the leaf spring and displaced in opposite directions from its neutral axis.

14.  An apparatus according to Claim 10 and Claim 11, 12 or 13, characterised in that the mechanical output element has a concave depression on its lower surface, engaged by a pin mounted on said horizontal leaf spring.

15.  Apparatus according to Claim 7, 8 or 9, characterised in that the input element is a movable core of an electromagnetic position transducer.

*Fig.1.*

*Fig.3.*

# Fig.2.

28  32  37
35
34
33  36  30
38  31
23

# Fig.4.

6  7  8
X
5a  5b  9
Y
10  11  13  15
A/D  MPU
12  14
TARE  S2
S1  lb/kg.

## Fig.5.

## Fig.6.

## DOCUMENTS CONSIDERED TO BE RELEVANT

| Category | Citation of document with indication, where appropriate, of relevant passages | Relevant to claim |
|---|---|---|
| | DE - C - 590 880 (P. VERBORG et al.)<br>* Page 1, lines 41-60; page 2, lines 20-24; claim 1; figure 1 *<br>-- | 1-4 |
| | DE - B - 2 528 426 (WIRTH, GALLO & CO.)<br>* Column 3, lines 20-39; claims 1-3; figure 1 *<br>-- | 1-4 |
| | US - A - 3 831 687 (D. MAFFIA et al.)<br>* Abstract; column 3, line 20 - column 4, line 56; figures 2-4,6 *<br>-- | 1,4,5,7 |
| | US - A - 4 023 634 (M.A. PROVI et al.)<br>* Abstract; column 2, line 54 - column 7, line 43; figures 1-8 *<br>-- | 1,4,7 8,12, 13 |
| | FR - A - 2 296 841 (GSE INC.)<br>* Page 1, line 17 - page 2, line 32; page 4, lines 1-17; page 8, line 24 - page 9, line 25; figures 1,5,5a,6 *<br>-- | 1,4,7, 12 |
| | FR - A - 2 288 974 (PIELKENROOD-VINITEX B.V.)<br>* Page 1, lines 15-20; page 2, line 10 - page 3, line 25; figure *<br>-- ./. | 7,8, 10-13 |

**CLASSIFICATION OF THE APPLICATION (Int. Cl.³)**

G 01 G 3/08

**TECHNICAL FIELDS SEARCHED (Int. Cl.³)**

G 01 G 3/08
3/14
7/02
7/04
19/44
19/46
21/07
21/16
21/18
21/23
21/24

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 27-02-1981 | NENTWICH |

EPO Form 1503.1 06.78

European Patent Office

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | DE - A - 2 609 560 (METTLER INSTRU-MENTE A.G.) <br><br> * Page 5, line 17 - page 6, line 11; figure 1 * <br><br> -- | 15 | |
| | FR - A - 2 295 407 (LUTRANA) <br><br> * Page 1, lines 20-35; page 3, line 18 - page 5, line 10; figure 1 * <br><br> -- | 1 | |
| P | GB - A - 2 026 270 (MEYER ALUMINI-UM LTD.) <br><br> * Abstract; page 1, lines 95-120; page 2, lines 66-70; figures 1,2 * <br><br> -- | 1,7, 10-13 | TECHNICAL FIELDS SEARCHED (Int. Cl. 3) |
| A | US - A - 3 658 143 (L.G. SCHWARTZ) <br><br> * Abstract; column 1, line 58 - column 3, line 7; figures 1, 2 * <br><br> ---- | 1 | |

EPO Form 1503.2  06.78